# EUROPEAN PATENT APPLICATION

(11) **EP 3 028 953 A1**
(43) Date of publication of application: **08.06.2016**
(21) Application number: 14832695.2
(22) Date of filing: 09.04.2014
(51) Int. Cl.: B65D 30/08

(54) **SIMPLIFIED CONTINUOUS STRIP FOR PRODUCING BAGS FOR FRUIT AND VEGETABLE PRODUCTS AND THE LIKE**

(30) Priority: 31.07.2013 ES 201331183
(71) Applicant: Cristóbal Meseguer, S.A., 30570 Beniaján Murcia (ES)
(72) Inventor: MESEGUER HUERTAS, José María, E-30570 Beniaján (Murcia) (ES)
(74) Representative: Roeb Diaz-Alvarez, Maria
(86) International application number: PCT/ES2014/070283
(87) International publication number: WO 2015/015024

(57) **Abstract**

The invention relates to a simplified continuous strip for producing bags for fruit and vegetable products and the like, formed by a continuous plastic web wherein at least one window is suitably made, and a continuous web of reticular material connected to said continuous plastic web. The two webs are joined over the entire surfaced therof by means of gluing, heat welding or any similar process.

## Description

### OBJECT OF THE INVENTION

The object of the present invention is a continuous band of the type used in the manufacture of bags for fruit and vegetable produce and the like, by means of the thermowelding or gluing of the longitudinal edges of said band, so as to transform the same into a continuous tube and, by means of the transversal cutting and thermowelding parallel to said cut, the obtaining and independisation of unitary bags.

The continuous band comprises a sheet of plastic in which one or more windows are disposed, and a sheet of mesh netting of dimensions similar to those of the plastic sheet, affixed to said plastic sheet. The use of the continuous band which is the object of this invention reduces the weight of the continuous band and increases its strength.

### BACKGROUND OF THE INVENTION

Certain fruit and vegetable products, such as tomatoes, potatoes, oranges, etc., have been marketed for a long time in plastic bags. These plastic bags may be manufactured from reticular materials or from a continuous material where one or more windows or perforations are stamped in the continuous material and which may or may not be covered by patches or continuous strips of reticular material attached to the continuous material by means of gluing or thermowelding. Also well-known are the plastic bags formed with several alternating strips of continuous material and reticular material joined at their longitudinal edges. Likewise known in the state of the art are the bags for all types of products and featuring handles, which may have been produced by stamping the material of the bag, or by means of plastic strips glued or thermowelded to the material of the bag.

Applications ES 200602504 and ES 200603034 describe a continuous band formed by a continuous plastic sheet in which one or more windows or perforations are disposed; these are covered by means of fragments of mesh or netting, also made from plastic material, whose edges are glued or thermowelded to the continuous sheet of plastic. Likewise, at the area of the continuous sheet of plastic destined to be the area of the bag where the handles are located, patches of plastic material are disposed by way of reinforcements in order to prevent the appearance of tears in said area.

The invention which is the object of the present description reduces the weight of the continuous band while it increases its strength, further facilitating the affixing of the fragments of mesh or netting to the continuous sheet of plastic. All of the above results in a considerable reduction in the cost of the unitary bag without reducing its capability.

### DESCRIPTION OF THE INVENTION

The simplified, reinforced continuous band for the manufacture of bags for fruit and vegetable produce and the like which is the object of the present invention is of the type of continuous band intended to be folded over itself and its longitudinal edges joined by gluing, thermowelding or similar procedure, in order to form a continuous tube which is divisible into a plurality of sectors corresponding to the respective bags by means of transversal cutting and the joining of said transversal edges by gluing, thermowelding or similar procedure. Said continuous band features smooth areas and reticular areas. Said reticular areas are a plurality of windows or orifices produced, for example by stamping, in the continuous sheet of plastic, enabling part of the continuous sheet of reticular material to be seen; the object of the reticular areas is to enable the aeration of the fruit or vegetable produce contained in the bags.

The continuous band of the invention comprises a first continuous sheet of plastic of a width equal to the width of said continuous band, and a continuous sheet of reticular material whose width coincides with the width of the aforementioned continuous band; said continuous sheet of reticular material is located on the face of the continuous band destined to be the internal face of the bag, and is affixed to the entire surface of said continuous sheet of plastic by gluing, thermowelding or similar procedure; this disposition and affixing of the two sheets increases the strength of the bag; hence the thickness of the continuous band may be reduced, and the joining process of the sheets is simplified, as is the procedure for the manufacture of the bags. In order to obtain the reticular areas of the continuous band, one or more stamped windows or orifices are suitably disposed in each of the sectors of said first continuous sheet of plastic.

The disposition of smooth areas and reticular areas provides a greater surface area for the printing of publicity and the necessary information concerning the produce contained in the bag.

The continuous band may feature plastic strips, conveniently affixed to form handles which facilitate transport, or any other type of disposition of handles which are well-known in the sector. It is at the areas where the handles are disposed that the greatest concentration of stresses is produced; these might bring about the breakage of the bags; to prevent this, a plurality of plastic material reinforcements may be suitably disposed, located either in the region of the handles or at other areas where they may be necessary, on the face of the continuous band destined to be the internal face of the bag. The entirety of the surface of each of said reinforcements is affixed to the continuous sheet of reticular material by gluing, thermowelding or similar procedure.

In the event that the design and the purpose of the continuous band should require that said band have greater strength, the reinforcements may be transformed into a second continuous sheet of plastic material whose width coincides with the width of the continuous band and, in order to obtain the windows or orifices necessary for the aeration of the products, in said second continuous sheet of plastic, windows or orifices are disposed, the dimensions and shapes of said windows or orifices being substantially equal to those disposed in the first continuous sheet of plastic. Said windows or orifices are located in the same position as the respective windows or orifices of the first continuous sheet of plastic.

The material of which the first continuous sheet of plastic is made may be the same as, or different from, the material of the second continuous sheet of plastic.

### DESCRIPTION OF THE FIGURES

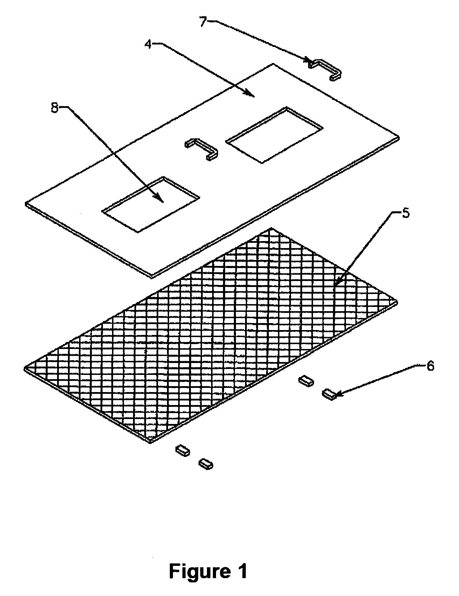

Figure 1 is an exploded view in perspective of a first embodiment of the continuous band.

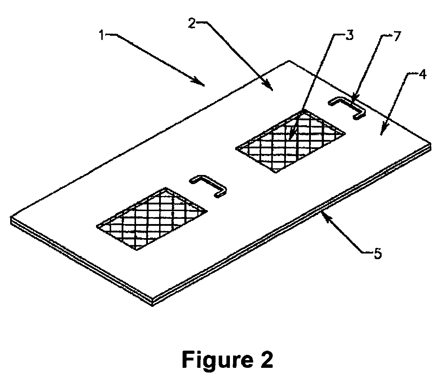

Figure 2 is a perspective view of a first embodiment of the continuous band.
Figure 3 is an exploded view in perspective of a second embodiment of the continuous band.

### LIST OF REFERENCES

1. Continuous band
2. Smooth area
3. Reticular area
4. First continuous sheet of plastic
5. Continuous sheet of reticular material
6. Reinforcement
7. Handle
8. Window
9. Second continuous sheet of plastic

### PREFERRED EMBODIMENT OF THE INVENTION

Figures one and two depict a first preferred embodiment of the invention. In this first preferred embodiment, a rectangular-shaped reticular area has been centrally disposed on the continuous band, and a handle of the type formed by a plastic strip has been attached by its extremities to said continuous band.

The continuous band of the first preferred embodiment is formed by a first continuous sheet of plastic, in which a rectangular-shaped window has been centrally disposed with regard to the longitudinal axis of the continuous band, of a width coinciding with the width of said band. A continuous sheet of reticular material has been thermowelded to this first continuous sheet of plastic, reinforcing the continuous band and covering the window, thus obtaining the reticular area. At the areas where the handles are joined to the band, a number of reinforcements are attached by thermowelding on the face destined to be the internal face of the bag.

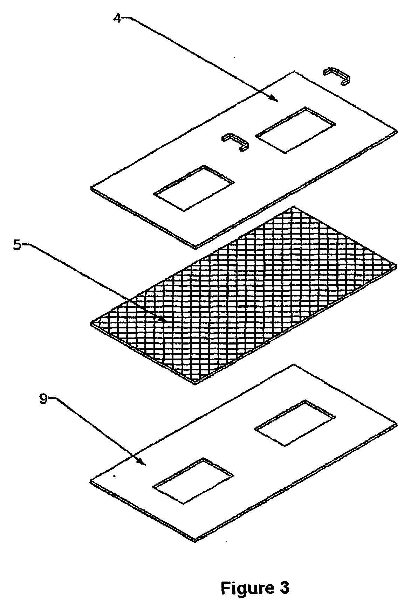

Figure 3 depicts a second embodiment of the bag, where the reinforcements are a second continuous sheet of plastic which reinforces the entirety of the continuous band and forms a "sandwich" whose central part is the continuous sheet of reticular material.

## Claims

1. A simplified, reinforced continuous band for the manufacture of bags for fruit and vegetable produce and the like, of the type consisting of a continuous band intended to be folded over itself and its longitudinal edges joined, in order to form a continuous tube which is divisible into a plurality of sectors corresponding to respective bags; a continuous band featuring smooth areas and reticular areas, **characterised in that** it comprises a first continuous sheet of plastic of a width equal to the width of said continuous band, and a continuous sheet of reticular material of a width coinciding with the width of the aforementioned continuous band; the aforementioned continuous sheet of reticular material is located on the face of the continuous band destined to be the internal face of the bag, and is attached to the entirety of the surface of the aforementioned continuous sheet of plastic by gluing, thermowelding or similar procedure; and **in that** one or more stamped windows or orifices are suitably disposed in each of the sectors of said first continuous sheet of plastic.

2. A simplified, reinforced continuous band for the manufacture of bags for fruit and vegetable produce and the like, as claimed in claim 1, **characterised in that** a plurality of plastic material reinforcements are suitably disposed on the face of the continuous band destined to be the internal face of the bag; the entirety of the surface of each of said reinforcements is affixed to the continuous sheet of reticular material by gluing, thermowelding or similar procedure.

3. A simplified, reinforced continuous band for the manufacture of bags for fruit and vegetable produce and the like, as claimed in claim 2, **characterised in that** the reinforcements are suitably disposed at the areas of each sector destined to feature handles.

4. A simplified, reinforced continuous band for the manufacture of bags for fruit and vegetable produce and the like, as claimed in claim 2, **characterised in that** the reinforcements consist of a second continuous sheet of plastic material of a width coinciding with the width of the continuous band, in which windows or orifices are disposed, the dimensions and shapes of said windows or orifices being substantially equal to those of the windows or orifices disposed in the first continuous sheet of plastic; said windows or orifices are located in the same position as the respective aforementioned windows or orifices in the first continuous sheet of plastic.

5. A simplified, reinforced continuous band for the manufacture of bags for fruit and vegetable produce and the like, as claimed in any of claims 2-4, **characterised in that** the material of the first continuous sheet of plastic and the material of the second continuous sheet of plastic are different.
